# EUROPEAN PATENT APPLICATION

(11) **EP 4 534 040 A2**
(43) Date of publication of application: **09.04.2025**
(21) Application number: 24195022.9
(22) Date of filing: 16.08.2024
(51) Int. Cl.: A61C 7/14, A61C 7/16, A61C 7/30

(54) **ORTHODONTIC ATTACHMENT**

(30) Priority: 02.10.2023 US 202318375852; 11.12.2023 US 202318536111; 08.07.2024 US 202418766181
(71) Applicant: 1092228 B.C. Ltd, Anmore, BC V3H 0G2 (CA)
(72) Inventor: SONG, Zhi Chun, Anmore, V3H0G2 (CA)
(74) Representative: Valet Patent Services Limited

(57) **Abstract**

An orthodontic hook includes a base pad, and a hook body having a connection part projecting from the base pad and a cantilevered part being cantilevered over the base pad such that a slot is formed. A first extremity is at maximum extension along the cantilevered part, a second extremity of the end part being maximally proximate to the base pad, the end part forming a protrusion having a tapered shape and tapering to the second extremity, and a ninth distance between the second extremity and a top surface of the end part is larger by at least 2.4 times than a fifth distance between the first extremity and the top surface of the end part.

## Description

### PRIORITIES CLAIMED

This application claims the priorities of U.S. application No. 18/536,111, filed 2023-December-11, U.S. application No. 18/375,852, filed 2023-October-02 and U.S. application No. 18/766181, filed 2024-07-08.

### BACKGROUND OF THE INVENTION

### 1. Field of Invention

This invention relates to dentistry and, in particular, to an orthodontic attachment or appliance forming a hook.

### 2. Description of Related Art

While braces and aligners straighten teeth, they do not align the bite. Dental elastics may be used in conjunction with either braces or aligners to treat malocclusion, or a misaligned bite. Other orthodontic appliances like the known Carriere^{®} Motion appliance may use elastic rubber bands to correct the relationship between the upper and lower jaws also.

Currently, there are many attachment options available for elastic rubber bands. Rubber bands unintentionally falling off happen while using these traditional attachments, especially when a patient is speaking or otherwise moving their mouth. Some patients also complain that their attachment is irritating to their buccal mucosa or their tongue when these attachments are cemented onto the tooth surface, because these attachments usually form a protruding head which can be irritating to soft tissue.

A prevalent traditional elastic attachment is an attachment that has a mushroom-shaped protrusion for accommodating elastic rubber band(s). The slot of this attachment is shallow, such that the rubber band may frequently fall off unintentionally. The side edge of the mushroom-shaped protrusion is a very thin plate-like edge which may irritate the buccal mucosa and/or the tongue. The slot of the traditional orthodontic attachment for elastic bands is usually shallow and the elastic band readily escapes from the shallow slot. Furthermore, sometimes patients have difficulty putting on the elastic band. The purpose of this invention is to provide a new attachment for orthodontic elastic bands that can hold the elastic band well without falling off accidentally even when a patient is speaking or otherwise moving their mouth.

Chinese patent publication No. CN 2126661977 mentioned an orthodontic hook which has a base pad and a hook body, the base pad may be cemented to a tooth surface, and part of the hook body is cantilevered over the base pad such that a slot is formed between the hook body and the base pad, a ball is positioned at the end of the hook body, this ball may be a little bigger than the other part of the hook body such that the end of the hook body can be round and less irritated. No apparent slot constriction is formed in the hook slot by this ball design. The ball cannot prevent the elastic band from falling off accidentally because the width of the slot of the hook is much greater than the thickness of the elastic band. This hook design is commonly used in brackets, buccal tube, and elastic hooks now. The ball at the end of the hook body is relatively small and the diameter of this ball is less than 1 mm. The relatively small size of the ball of the `977 publication constrains the guiding function of the ball for guiding the elastic rubber band into the slot. Furthermore, the spherical shape of the ball disclosed in the `977 publication constrains the extent to which any constriction of the slot can be narrowed without rendering insertion of an elastic rubber band excessively difficult for a typical user.

It is an object of this invention to provide a guiding surface at the end part of the hook body that is relatively large and provides a slot constriction that is relatively narrow, and to provide the guiding surface such that it is dimensioned to guide the elastic rubber band to slide into the slot constriction.

Sometimes it is difficult to hold a traditional attachment using forceps. Thus, it is also difficult to put a traditional attachment in the back of the mouth near a molar or at a lingual surface of a tooth. It is an object of this invention to provide an attachment dimensioned to facilitate being held by forceps.

### SUMMARY

The above shortcomings may be addressed by providing, in accordance with one aspect of the invention, an orthodontic hook attachable to a tooth surface. The hook comprises (a) a base pad attachable to the tooth surface; and (b) a hook body which comprises a connection part projecting from the base pad and extending to a cantilevered part of the hook body that is cantilevered over the base pad, such that a slot is formed in the orthodontic hook; the cantilevered part terminates in an end part of the cantilevered part, a first extremity of the end part is a point of maximum extension along the cantilevered part, a second extremity of the end part is maximally proximate to the base pad, a slot opening formed between the first extremity and the base pad, a slot constriction formed between the second extremity and the base pad, the slot narrows from the slot opening to the slot constriction and the slot widens from the slot constriction to a slot center, and a fifth width of the slot constriction is less than 1.0 mm.

The end part may form a protrusion having a tapered shape and tapering to the second extremity. A first distance between the first extremity and the base pad may be larger by at least 1.8 times than a second distance between the second extremity and the base pad. A sixth distance between the first extremity and the second extremity may be larger by at least 2 times than a fifth distance between the first extremity and the top surface of the end part. A ninth distance between the second extremity and a top surface of the end part may be larger by at least 2.4 times than a fifth distance between the first extremity and the top surface of the end part. The ninth distance between the second extremity and the top surface of the end part may be larger by at least 2.8 times than a fifth distance between the first extremity and the top surface of the end part. A slot constriction may be formed between the second extremity and the base pad, the slot may narrow from a slot opening to the slot constriction and then widen from the slot constriction to a slot center. The first distance between the first extremity and the base pad may be larger by at least 2.0 times than the second distance between the second extremity and the base pad. A second protrusion which extends toward the end part from the base pad may have a tapered shape and taper to a second end of the second protrusion, and a slot constriction may be formed between the second extremity and the second end. The slot defines a slot end maximally distal from the second extremity, a third extremity of the connection part is at a top surface of the connection part and maximally distal from the slot end, and a seventh distance between the third extremity and the slot end may be larger than an eighth distance between the first extremity and the slot end. A longitudinal axis of the connection part may form an angle less than 180 degrees with a second longitudinal axis of the cantilevered part. The second extremity may be disposed directly above the base pad. The second distance may be less than 1.2 mm. The second distance may be less than 0.8 mm. The second distance may be less than 1.0mm. The first distance may be larger than the second distance by at least 2 times. A slot constriction between the second extremity and the base pad may be the narrowest part of the slot, and the slot constriction may be formed between a slot opening and a slot center. The slot constriction may be dimensioned to impede, but not prevent, removal of an elastic band engaged with the orthodontic hook in an orthodontic treatment from the slot. The protrusion may be dimensioned for preventing removal of the elastic band from the slot when the elastic band is relaxed. The elastic band may have a first thickness when stretched and a second thickness when relaxed. The first thickness may be less than the second thickness. The protrusion may be dimensioned such that the second distance is equal to or greater than the first thickness. The protrusion may be dimensioned such that the second distance is less than the second thickness. A first width of the end part may be greater than a second width of the middle part. The connection part may have a third width greater than the second width. The base pad may be in unitary construction with the orthodontic appliance. The end part may define an end surface extending between the first extremity and the second extremity, the end part at the end surface may form an acute angle with the base pad, the acute angle may be smaller than 85 degrees and bigger than 30 degrees. The base pad may have an outer surface shaped for conformity with a selected tooth surface. The base pad may have an outer surface with greater curvature than the tooth surface. A second distance between the second extremity and the base pad may be less than a second thickness of an elastic band engaged with the orthodontic hook in an orthodontic treatment when the elastic band is relaxed. A second distance between the second extremity and the base pad may be greater than a first thickness of an elastic band engaged with the orthodontic hook in an orthodontic treatment when the elastic band is stretched. W4 may be larger by at least 2 times than W5. W4 may be larger by at least 2.6 times than W5. W5 may be less than 0.8mm. W5 may be less than 0.5mm. W5 may be less than 0.3mm.

In accordance with another aspect of the invention, there is provided an orthodontic hook attachable to a tooth surface. The hook comprises (a) a base pad attachable to the tooth surface; and (b) a hook body which comprises a connection part projecting from the base pad and extending to a cantilevered part of the hook body that is cantilevered over the base pad, such that a slot is formed in the orthodontic hook; the cantilevered part terminates in an end part of the cantilevered part, a first extremity of the end part is a point of maximum extension along the cantilevered part, a second extremity of the end part is maximally proximate to the base pad, the end part forms a protrusion having a tapered shape and tapering to the second extremity, and a ninth distance between the second extremity and a top surface of the end part is larger by at least 2.4 times than a fifth distance between the first extremity and the top surface of the end part.

A sixth distance between the first extremity and the second extremity may be larger by at least 2 times than a fifth distance between the first extremity and the top surface of the end part. The ninth distance between the second extremity and the top surface of the end part may be larger by at least 2.8 times than a fifth distance between the first extremity and the top surface of the end part. A slot opening formed between the first extremity and the base pad, a slot constriction formed between the second extremity and the base pad, the slot may narrow from the slot opening to the slot constriction and then widen from the slot constriction to a slot center. A first distance between the first extremity and the base pad may be larger by at least 2.0 times than a second distance between the second extremity and the base pad. A second tapered protrusion which extends toward the end part from the base pad may has a tapered shape and taper to a second end of the second protrusion, and a slot constriction may be formed between the second extremity and the second end of the second protrusion. The slot defines a slot end maximally distal from the second extremity, a third extremity of the connection part is at a top surface of the connection part and maximally distal from the slot end, and a seventh distance between the third extremity and the slot end may be larger than an eighth distance between the first extremity and the slot end. A longitudinal axis of the connection part may form an angle less than 180 degrees with a second longitudinal axis of the cantilevered part. The second extremity may be disposed directly above the base pad. The second distance may be less than 1.2 mm. The second distance may be less than 0.8 mm. The second distance may be less than 1.0mm. The first distance may be larger than the second distance by at least 2 times. A slot constriction between the second extremity and the base pad may be the narrowest part of the slot, and the slot constriction may be formed between a slot opening and a slot center. The slot constriction may be dimensioned to impede, but not prevent, removal of an elastic band engaged with the orthodontic hook in an orthodontic treatment from the slot. The elastic band may have a first thickness when stretched and a second thickness when relaxed. The first thickness may be less than the second thickness. The protrusion may be dimensioned such that the second distance is equal to or greater than the first thickness. The protrusion may be dimensioned such that the second distance is less than the second thickness. A first width of the end part may be greater than a second width of the middle part. The connection part may have a third width greater than the second width. The second width may be less than the first width and the third width such that the middle part is dimensioned for receiving forceps. The base pad may be in unitary construction with the orthodontic appliance. The end part may define an end surface extending between the first extremity and the second extremity, the end part at the end surface may form an acute angle with the base pad, the acute angle may be smaller than 85 degrees and bigger than 30 degrees. The base pad may have an outer surface shaped for conformity with a selected tooth surface. The base pad may have an outer surface with greater curvature than the tooth surface. A second distance between the second extremity and the base pad may be less than a second thickness of an elastic band engaged with the orthodontic hook in an orthodontic treatment when the elastic band is relaxed. A second distance between the second extremity and the base pad may be greater than a first thickness of an elastic band engaged with the orthodontic hook in an orthodontic treatment when the elastic band is stretched. The slot defines a slot end maximally distal from the second extremity, the second protrusion defines a fourth extremity maximally distal to the slot end, a distance between the first extremity and the fourth extremity is larger than the fifth width W5 of the slot constriction between the second extremity and the second end by at least 1.8 times. W4 may be larger by at least 1.8 times than W5. W4 may be larger by at least 2 times than W5. W4 may be larger by at least 2.6 times than W5. W5 may be less than 0.8mm. W5 may be less than 0.5mm. W5 may be less than 0.3mm.

In accordance with another aspect of the invention, there is provided an orthodontic hook attachable to a tooth surface. The hook comprises (a) a base pad attachable to the tooth surface; and (b) a hook body which comprises a connection part projecting from the base pad and extending to a cantilevered part of the hook body that is cantilevered over the base pad, such that a slot is formed in the orthodontic hook; the cantilevered part terminates in an end part of the cantilevered part, a first extremity of the end part is a point of maximum extension along the cantilevered part, a second extremity of the end part is maximally proximate to the base pad, the end part forms a protrusion having a tapered shape and tapering to the second extremity, a second protrusion which extends toward the end part from the base pad has a tapered shape and tapers to a second end of the second protrusion, and a slot constriction is formed between the second extremity and a second end of the second protrusion.

The foregoing summary is illustrative only and is not intended to be in any way limiting. Other aspects and features of the present invention will become apparent to those of ordinary skill in the art upon review of the following description of embodiments of the invention in conjunction with the accompanying figures and claims.

### BRIEF DESCRIPTION OF THE DRAWINGS

Various objects, features and advantages of the invention will be apparent from the following description of embodiments of the invention, as illustrated in the accompanying drawings. The drawings are not necessarily to scale, emphasis instead being placed upon illustrating the principles of various embodiments of the invention.
- Figure 1: is a perspective view of a first embodiment of an orthodontic hook.
- Figure 2: is a perspective side view of the first embodiment of the orthodontic hook.
- Figure 3: is a side view of the first embodiment of the orthodontic hook.
- Figure 4: is a top view of the first embodiment of the orthodontic hook.
- Figure 5: is a side view of the first embodiment of the orthodontic hook, showing defined distances D1, D2, D3, D4, D5, D6, D9.
- Figure 6: is a top view of the first embodiment of the orthodontic hook, showing defined widths W1 and W2.
- Figure 7: is a side view of the first embodiment of the orthodontic hook, showing an angle Q and a force F.
- Figure 8: is a left-side view of a second embodiment of an orthodontic hook.
- Figure 9: is a top view of the second embodiment of the orthodontic hook.
- Figure 10: is a side view of a third embodiment of an orthodontic hook, showing defined distances D7 and D8.
- Figure 11: is a top view of a variation of the third embodiment of the orthodontic hook.
- Figure 12.: is a side view of a fourth embodiment of an orthodontic hook, showing defined distances W4, W5 and second protrusion.

### DETAILED DESCRIPTION

An apparatus for retaining an elastic band includes: (a) means for receiving the elastic band; (b) means for guiding the elastic band toward a slot constriction; and (c) means for engaging with an aligner to arrange the teeth.

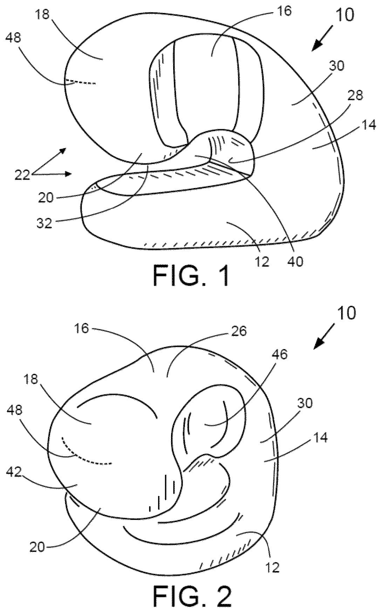

Figure 1 and figure 2 are perspective views of a first embodiment of an orthodontic hook 10.

This orthodontic hook 10 is attachable to one of a tooth surface and an orthodontic appliance (not shown in Figures 1 and 2). In some cases, the hook 10 is cemented onto the tooth surface. In some embodiments, the hook 10 is part of and may even be in unitary construction with another orthodontic appliance (not shown in Figures 1 and 2), which can be cemented onto the tooth surface.

The hook 10 includes a base pad 12 that is attachable to one of the tooth surface and another orthodontic appliance (not shown in Figures 1 and 2). In some cases, the base pad 12 is cemented onto the tooth surface. In some embodiments, the base pad 12 is part of and may even be in unitary construction with another orthodontic appliance (not shown in Figures 1 and 2), which can be cemented onto the tooth surface.

The hook 10 includes a hook body 30 that includes a connection part 14 projecting from the base pad 12 and extends to a middle part 16 of the hook body 30, which further extends to an end part 18 of the hook body 30. The middle part 16 and the end part 18 are cantilevered over at least one of the connection part 14 and the base pad 12, such that a slot 40 is formed in the orthodontic hook 10. A first extremity 48 of the end part 18 is a point of maximum extension along the cantilevered part of the hook body 30, and a second extremity 32 of the end part 18 is maximally proximate to the base pad 12. The second extremity 32 is the end 32 of the tapered protrusion 20 of the end part 18. A slot end 28 is the part of the slot 40 that is maximally distal from the second extremity 32. In variations of contours of the hook body 30, each of the first extremity 48 and the second extremity 32 may form a single point, line, curve, or area, for example.

The cantilevered part of the hook body 30 consists of the end part 18 and the middle part 16. The middle part 16 is the part of the cantilevered part that is not directly associated with the tapered protrusion 20, while the end part 18 is the remaining part of the cantilevered part which includes the protrusion 20 and the part of the cantilevered part directly associated with the protrusion 20.

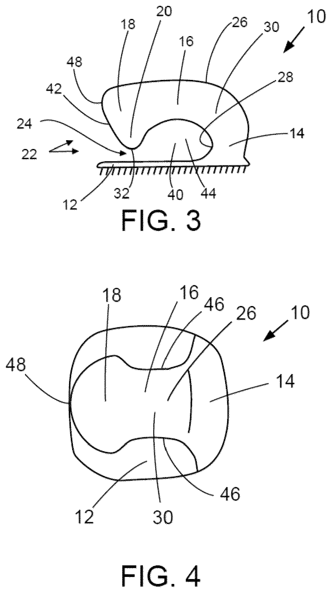

Figure 3 is a side view of the first embodiment of the orthodontic hook 10. The orthodontic hook 10 is attachable to one of a tooth surface and another orthodontic appliance. The hook 10 includes a base pad 12 that is attachable to a tooth surface. In some embodiments, the base pad 12 is attached to another orthodontic appliance, or the base pad 12 can be part of the other orthodontic appliance such as a Carriere^{®} Motion Appliance, Buccal Tube, or Bracket etc. The base pad 12 may have different shapes, like a circle, a rectangle, an oval, or an irregular shape. The outer surface of this base pad 12 for cementing with the tooth surface is a flat surface as shown in Figure 3. In some embodiments the base pad 12 has a curved surface conforming to the tooth surface.

The orthodontic hook 10 includes a hook body 30 that includes a connection part 14 projecting from the base pad 12 and extending to a middle part 16 of the hook body 30, which extends to an end part 18 of the hook body 30. The middle part 16 and the end part 18 are cantilevered over the base pad 12 such that a slot 40 is formed between the hook body 30 and the base pad 12. A tapered protrusion 20 extends from the end part 18 of the hook body 30 toward the base pad 12, such that a constriction 24 of the slot 40 is formed between the end 32 of the tapered protrusion 20 and the base pad 12. The constriction 24 is the narrowest part of the slot 40. The constriction 24 shown in Figures 1 to 7 is positioned directly above the base pad 12. The slot constriction 24 is between the slot opening 22 and the slot center 44.

In this embodiment shown in Figures 1 to 7, a first extremity 48 of the end part 18 is a point of maximum extension along the cantilevered part of the hook body 30, and a second extremity 32 of the end part 18 is the end 32 of the protrusion 20. The second extremity 32 is maximally proximate to the base pad 12. The slot end 28 is shown as the part of the slot 40 that is maximally distal from the second extremity 32.

The slot 40 gradually narrows from the slot opening 22 to the slot constriction 24. In the embodiment of Figures 1 to 7, the slot 40 gradually narrows from the first extremity 48 to the second extremity 32. The relatively wider slot opening 22 is very helpful to catch the elastic rubber band (not shown) in the very beginning of a process of inserting the rubber band into the slot 40. The constriction 24 is useful for preventing the elastic rubber band from unintentionally falling off or otherwise unintentionally exiting the slot 40. The elastic rubber band must be pulled in a certain direction to take off the elastic rubber band in this embodiment. The relatively larger and smooth end part 18 has no sharp edges to minimally irritate the tongue and the buccal mucosa.

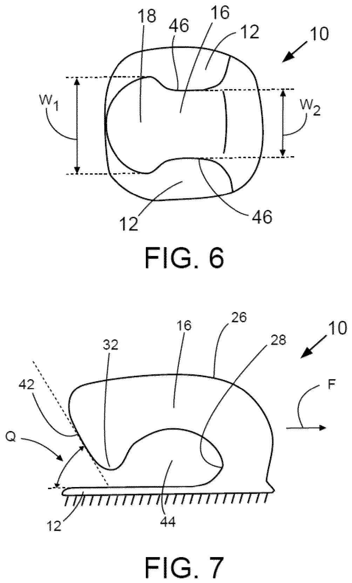

Figure 4 is a top view of the first embodiment of the orthodontic hook 10. This figure shows that the hook body 30 in the first embodiment is as long as the base pad 12, such that the projection of the hook body 30 does not extend past the base pad 12. Referring to Figure 6, the first width W1 of the end part 18 of the hook body 30 is greater than the second width W2 of the middle part 16 of the hook body 30. The embodiment of Figures 1 to 7 is advantageously helpful for preventing the elastic rubber band (not shown) from unintentionally falling off or otherwise exiting the slot 40. In some embodiments, the first width W1 may be equal to the second width W2.

This hook 10 is suitable to be picked up by using forceps to clasp the middle part 16 of the hook body 30 at both side surfaces 46 of the middle part 16. It is advantageously convenient to hold the hook 10 at the two side surfaces 46 of the hook body 30.

The orthodontic hook 10 can be made of metal, plastic, ceramic, composite resin, or any other suitable materials.

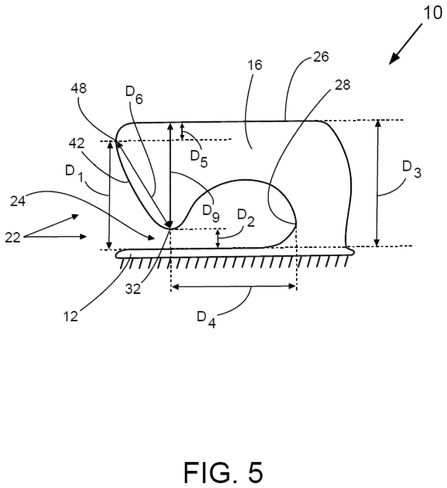

Figure 5 is a side view of the first embodiment of the orthodontic hook 10. In this figure the first distance D1 is the distance from the first extremity 48 to the base pad 12, such that the first distance D1 extends between the first extremity 48 and the base pad 12. The second distance D2 is the distance from the second extremity 32 to the base pad 12. The end surface (guiding surface) 42 is a smooth surface from the first extremity 48 to the second extremity 32. The end surface 42 can be a flat surface or a curved surface. In the embodiment of Figure 5, the end surface 42 is a curved surface. An elastic rubber band (not shown) can easily be pulled into the slot center 44 (Figure 3) from the slot opening 22. In some embodiments, D1 is at least 1.5mm and the end surface 42 is smooth and angled. D2 usually is less than 1.2mm. The elastic rubber band (not shown) may be bigger than D2 in its initial state, but under a pulling force the elastic rubber band becomes thinner such that the elastic rubber band readily passes the slot constriction 24 under the pulling force. In the embodiment of Figure 5, D1 is larger than D2 by at least 1.5 times. In some embodiments, D1 is larger than D2 by at least 1.8 times. In some embodiments, D1 is larger than D2 by at least 2 times. In some embodiments, D1 is larger than D2 by at least 2.6 times. In some cases, D2 is less than 1.2mm. In some cases, D2 is less than 1.0mm. In some cases, D2 is less than 0.8mm. In some case D2 is less than 0.7mm.

An elastic band (no shown) engaged with the orthodontic hook 10 in an orthodontic treatment may have a first thickness when stretched and a second thickness when relaxed. The second distance D2 between the second extremity 32 and the base pad 12 is less than the second thickness of the elastic band, but greater than the first thickness of the elastic band. The second thickness of the elastic bands used in the orthodontic treatment is larger than 1.0 mm. The second distance D2 is less than 1.0 mm. The first distance D1 is greater than the second thickness of the elastic band such that the slot opening 22 may catch the elastic band, and the elastic band having the first thickness when stretched by a force F (Fig. 7) may slide on the guiding surface 42 and pass the slot constriction 24, and finally enter the slot center 44. The slot constriction 24 may be dimensioned to impede, but not prevent, removal of an elastic band engaged with the orthodontic hook 10 in an orthodontic treatment from the slot center 44. No apparent slot constriction whose width is less than the second thickness of the rubber band is designed near the slot opening in the previous orthodontic hooks. No apparent guiding surface is designed between the slot opening and the slot constriction in the previous orthodontic hooks.

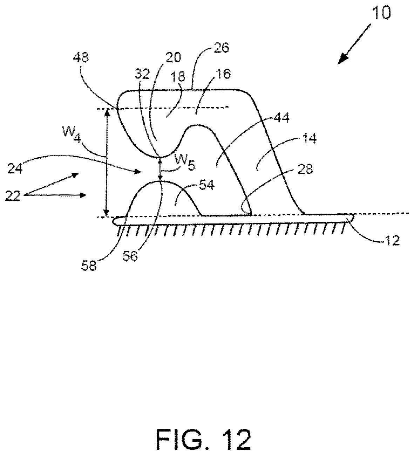

The slot opening 22 is formed between the first extremity and the base pad, the slot constriction 24 is formed between the second extremity and the base pad. When the base pad 12 is a flat surface or an evenly and slowly changed curved surface, D1 is also the fourth width W4 of the slot opening 22, D1 is the perpendicular distance from the first extremity 48 to the nearest point on the base pad 12; D2 is also the fifth width W5 of the slot constriction 24, D2 is the perpendicular distance from the second extremity 32 to the nearest point on the base pad 12.(Figure 5) When the base pad 12 has a second protrusion 54 extending from the base pad 12 and tapering to the second end 56 of the second protrusion 54 just opposite to the protrusion 20, D1 and W4 are the perpendicular distance from the first extremity 48 to the base pad 12 without considering the protrusion 54, D2 and W5 are the distance from the second extremity 32 to the second end 56 of the second protrusion 54. (Figure 12) D2 is the shortest distance between the second extremity 32 and the base pad 12. In other cases, W4 may be larger by at least 2 times than W5. W4 may be larger by at least 1.8 times than W5. W4 may be larger by at least 2.6 times than W5. W5 may be less than 0.8mm. W5 may be less than 0.5mm. W5 may be less than 0.3mm.

The protrusion 20 of the end part1 8 has a tapered shape with a gradual reduction in cross-sectional area and tapers to the end 32 of the protrusion 20. The end 32 of the protrusion 20 is the second extremity 32 which is the part of the end part 18 most proximate to the base pad 12. The width of the slot 40 gradually narrows from the slot opening 22 to the slot constriction 24, and then gradually widens from the slot constriction 24 to the slot center 44.

The ninth distance D9 from the second extremity 32 to the top surface 26 of the end part 18 is larger by at least 2.2 times than the fifth distance D5 from the first extremity 48 to the top surface 26 of the end part 18. Sometimes D9 is larger by at least 2.4 times than D5. Sometimes D9 is larger by at least 2.8 times than D5. Sometimes D9 is larger by at least 3 times than D5. D9 deducted by D5 is the height of the protrusion 20 of the end part 18, the height of the protrusion 20 usually is bigger than 0.5mm, sometimes bigger than 0.6mm. When the end part 18 is a perfectly round ball, D9 is twice as big as D5. When D9 is bigger than D5 by more than 2 times, two situation may exist, one situation is that the end part 18 has a protrusion projecting toward the base pad and has no protrusion projecting away the base pad(such as the embodiments in this application); the second situation is that the end part 18 has a first protrusion projecting toward the base pad and has a second protrusion projecting away the base pad, but the first protrusion is higher than the second protrusion. Larger D9 and smaller D5 may work together to get a bigger D6.

The fifth distance D5 is the distance from the first extremity 48 to the top surface 26 of the end part 18. When the top surface 26 of the end part 18 is a curved surface, D5 is the distance from the first extremity 48 to a tangential plane that passes through the point at the top surface 26 of the end part which is maximally distal from the base pad 12, D9 is the distance from the second extremity 32 to a tangential plane that passes through the point at the top surface 26 of the end part 18 which is maximally distal from the base pad 12.

In this application all the distance from a point to a surface is the shortest distance from the point to the surface, all the distance between two points is the shortest distance between these two points.

The sixth distance D6 is the distance from the first extremity 48 to the second extremity 32, D6 is larger than D5 by at least 2 times. In some embodiments D6 is larger than D5 by at least 3 times. When the end part 18 is a perfectly round ball, D6 is larger than D5 by less than 1.5 times. In some embodiments D6 is larger than D5 by at least 4 times. The first extremity 48 is positioned to a place as close to the top surface 26 of the end part 18 as possible, the second extremity 32 is positioned to a place close to the base pad 12, such that the end surface (guiding surface) 42 may be relatively large and the elastic rubber band can be readily guided into the narrow slot constriction 24. This big guiding surface 42 makes the narrow slot constriction 24 advantageously functional in the clinic, and at the same time the hook 10 is less irritating and inhibits the elastic rubber band from unintentionally escaping when the elastic rubber band is dragged in different directions. In this embodiment D6 can be between 0.7mm to 3mm, for example. Usually, D6 is larger than 0.8 mm.

D6 is advantageously large enough for the embodiments of the invention to provide a significant end surface 42 for readily guiding the elastic band into the narrow slot constriction 24, while still permitting D5 to be large enough to advantageously avoid sharp edges and corners of height D5 near the top surface 26 that might irritate the tongue and/or buccal mucosa of a patient. The edges and corners of height D5 are preferably rounded and smooth.

In some embodiments, the top surface 26 of the end part 18, the top surface 26 of the middle part 16 and the top surface 26 of the connection part 14 are at the same distance from the base pad 12. In other embodiments, the top surface 26 of different parts of the hook body 30 may not be at the same distance from the base pad 12.

Still referring to Figure 5, the hook body 30 has a smooth top surface 26. Preferably, a third distance D3 extending from the top surface 26 of the hook body 30 to the base pad 12 is at least 1.8mm. In the embodiment of Figures 1 to 6, the hook 10 can be caught by forceps (not shown) at the two side surfaces 46 (Figure 6) of the hook body 30. In some embodiments, the third distance D3 is at least 2.0mm.

Referring to Figure 5, a fourth distance D4 is the distance extending from the second extremity 32 to the slot end 28. D4 should be at least 1 mm in most embodiments. Also, D4 should be large enough to allow the orthodontic hook 10 to hold at least one elastic rubber band.

Figure 6 is a top view of the first embodiment of the orthodontic hook 10. In this figure the width W1 of the end part 18 is larger than the width W2 of the middle part 16, such that the elastic rubber band is impeded from unintentionally falling off the hook 10 or otherwise unintentionally exiting the slot 40.

Figure 7 is a side view of the first embodiment of the orthodontic hook 10. In the embodiment of Figure 7, an angle Q formed between the end surface 42 and the base pad 12 is an acute angle. In preferable embodiments, the angle Q is smaller than 85 degrees and bigger than 30 degrees and the end surface 42 is a smooth surface.

Figure 7 also shows an arrow F pointing in the direction of an installation force "F" applied to an elastic rubber band (not shown) being inserted into the slot 40.

The elastic rubber band (not shown) may slide during its placement from the slot opening 22 to the slot constriction 24 along the angled and smooth end surface 42 under an installation force "F", and then pass the slot constriction 24 and finally enter the slot center 44. Usually, the slot constriction 24 is the narrowest part of the slot 40 and is dimensioned to prevent the rubber band from unintentional falling off or otherwise unintentionally exiting the slot 40. Usually, the attachment 10 cemented on a tooth surface has a height in the range of 1.5-2.8mm (a taller attachment may irritate the tongue or buccal mucosa), such that the slot constriction 24 is helpful to get a relatively large end surface (guiding surface) 42 to guide the elastic rubber band (not shown) to slide into the slot 40. A relatively large end surface 42 also minimally irritates the tongue and buccal mucosa of a patient.

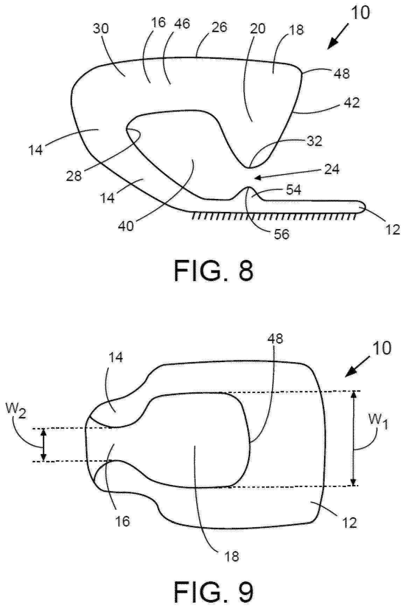

Figure 8 is a left-side view of a second embodiment of the orthodontic hook 10. The orthodontic hook 10 of the third embodiment includes a base pad 12 which is attachable to one of a tooth surface and another orthodontic appliance.

The orthodontic hook 10 of the second embodiment shown in Figures 8 and 9 also includes a hook body 30 that includes a connection part 14 projecting from the base pad 12 and extending to a middle part 16 of the hook body 30, which extends to an end part 18 of the hook body 30. The middle part 16 and the end part 18 are cantilevered over the connection part 14 and the base pad 12, such that a slot 40 is formed in the orthodontic hook 10. A first extremity 48 of the end part 18 is a point of maximum extension along the cantilevered part of the hook body 30. A second extremity 32 of the end part 18 is maximally proximate to the base pad 12. In this embodiment, part of the slot 40 is formed between the middle part 16 of the hook body 30 and the connection part 14 of the hook body 30. A slot end 28 is shown in Figure 8 as being the part of slot 40 that is maximally distal from the second extremity 32.

In addition to the protrusion 20 extending toward the base pad 12 from the end part 18, in some embodiments a second protrusion 54 (Figure 8) extends toward the end part 18 from the base pad 12 such that the slot constriction 24 is formed between the two protrusions 20 and 54. The slot 40 gradually narrows from the slot opening 22 to the slot constriction 24, a first guiding surface 42 is at the first protrusion 20 and a second guiding surface is at the second protrusion 54. The second protrusion 54 also has a tapered shape and tapering to a second end 56 of the second protrusion 54, the constriction 24 is formed between the second extremity 32 and the second end 56, the second distance D2 in this embodiment is the distance between the second extremity 32 and the second end 56.

Figure 9 is a top view of the second embodiment of the orthodontic hook 10, which shows the first width W1 of the end part 18 is larger than the second width W2 of the middle part 16.

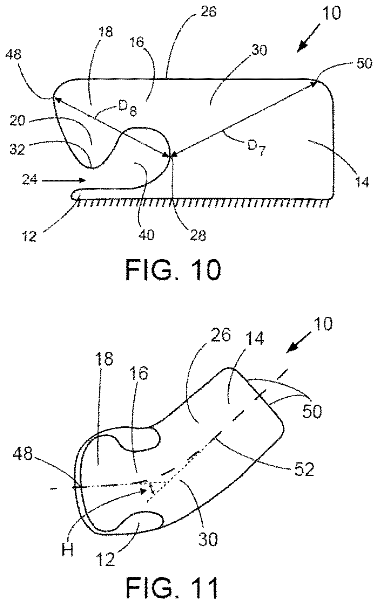

Figure 10 shows a side view of a third embodiment of the orthodontic hook 10. The orthodontic hook 10 in the third embodiment of Figure 10 is attachable to a tooth surface. The hook 10 includes a base pad 12 that is attachable to the tooth surface.

The orthodontic hook 10 of the third embodiment includes a hook body 30 that includes a connection part 14 projecting from the base pad 12 and extending to a middle part 16 of the hook body 30, which extends to an end part 18 of the hook body 30. The middle part 16 and the end part 18 are cantilevered over the base pad 12 such that a slot 40 is formed between the hook body 30 and the base pad 12. A protrusion 20 extends from the end part 18 of the hook body 30 toward the base pad 12, such that a slot constriction 24 is formed between the tip 32 of the protrusion 20 and the base pad 12.

In this embodiment of Figure 10, the top surface 26 of the end part 18, the top surface 26 of the middle part 16 and the top surface 26 of the connection part 14 are at the same distance from the base pad 12. In variations of the embodiment of Figure 10 and in other embodiments, the top surface 26 of different parts of the hook body 30 may not be at the same distance from the base pad 12.

A first extremity 48 of the end part 18 is a point of maximum extension along the cantilevered part of the hook body 30, and a second extremity 32 of the end part 18 is the tip 32 of the protrusion 20. The second extremity 32 is maximally proximate to the base pad 12. The slot end 28 is shown in Figure 10 as being the part of the slot that is maximally distal from the second extremity 32. A third extremity 50 of the connection part 14 is the part of a top surface 26 of the connection part 14 that is maximally distal from the slot end 28. In the embodiment of Figure 10, a seventh distance between the third extremity 50 and the slot end 28 is larger than an eighth distance between the first extremity 48 and the slot end 28.

This embodiment also has the characteristics that are similar or analogous to those of the first embodiment (Figures 1-7).

The hook body 30 of this embodiment has a relatively large connection part 14. The connection part 14 may be fully or partially covered by an aligner (not shown) when the orthodontic hook 10 is cemented on the tooth surface and the aligner is fully installed. The large connection part 14 may work as an attachment on a tooth surface, the connection part 14 is dimensioned to be held by the aligner tightly, and the aligner may deliver force to the tooth by holding the attachment (the connection part 14), especially when employing the elastic band together.

Figure 11 is a top view of the third embodiment of the orthodontic hook 10, which shows the longitudinal axis 52 of the connection part 14 forms an angle H with the longitudinal axis 52 of the middle part 16 and the end part 18. The angle H is less than 180 degrees, and in a variation the angle H may be near 90 degrees. This design is helpful to cement the attachment (the relatively bigger connection part 14) and the hook 10 both on a short crown surface that is subject to an alignment treatment involving an aligner. While the embodiment of Figure 11 is shown with an arcuate longitudinal axis 52, any embodiment disclosed herein may have in variations thereof a straight, arcuate, or curved longitudinal axis 52.

Figure 12 is a side view of the fourth embodiment of the orthodontic hook 10. The orthodontic hook 10 is attachable to one of a tooth surface and another orthodontic appliance. The hook 10 includes a base pad 12 that is attachable to a tooth surface. The orthodontic hook 10 includes a hook body 30 that includes a connection part 14 projecting from the base pad 12 and extending to a middle part 16 of the hook body 30, which extends to an end part 18 of the hook body 30. The middle part 16 and the end part 18 are cantilevered over the base pad 12 such that a slot 40 is formed between the hook body 30 and the base pad 12. In addition to the protrusion 20 extending toward the base pad 12 from the end part 18, a second protrusion 54 extends toward the end part 18 from the base pad 12 such that the slot constriction 24 is formed between the two protrusions 20 and 54. The slot 40 gradually narrows from the slot opening 22 to the slot constriction 24 and widens from the slot constriction 24 to the slot center 44. The slot 40 defines a slot end 28 maximally distal from the second extremity 32. The second protrusion 54 defines a fourth extremity 58 maximally distal to the slot end 28. The protrusion 20 has a tapered shape and tapering to a second extremity 32, the second protrusion 54 also has a tapered shape and tapering to a second end 56 of the second protrusion 54, the constriction 24 is formed between the second extremity 32 and the second end 56. A first guiding surface 42 from the first extremity 48 to the second extremity 32 is at the first protrusion 20 and a second guiding surface is from the fourth extremity 58 to the second end 56 of the second protrusion 54. These two guiding surfaces work together to guide the rubber band to enter slot constriction 24. The fifth width W5 of the slot constriction 24 in this embodiment is the distance between the second extremity 32 and the second end 56, the fourth width W4 of the slot opening 22 in this embodiment is the distance between the first extremity 48 and the base pad 12 without considering the second protrusion 54. A distance between the first extremity 48 and the fourth extremity 58 is larger than the fifth width W5 of the slot constriction 24 between the second extremity 32 and the second end 56 by at least 1.8 times. The fifth width W5 is less than 1.0 mm. In some cases, W5 is less than 0.8 mm. The fourth width W4 is larger than the fifth width by at least 1.8 times. In other cases, W4 may be larger by at least 2 times than W5, W4 may be larger by at least 2.6 times than W5, W5 may be less than 0.8mm, W5 may be less than 0.5mm, W5 may be less than 0.3mm. (Figure 12)

Sometimes no protrusion 20 toward the base pad 12 in the end part 18, only has second protrusion 54, the slot constriction 24 is formed between the end part 18 and the second protrusion 54. Sometimes the end part 18 is a round ball, the slot constriction 24 is formed between the round ball and the second protrusion 54.

Various features have been described and illustrated in association with specific embodiments of the invention. Except where an incompatible combination of features would result, any feature described or illustrated in association with a particular embodiment herein may be employed with any other embodiment described or illustrated herein.

### Reference characters associated with the drawings

| | |
|---|---|
| Orthodontic hook | 10 |
| Base pad | 12 |
| Connection part of hook body | 14 |
| Middle part of hook body | 16 |
| End part of hook body | 18 |
| Protrusion | 20 |
| Slot Opening | 22 |
| Slot Constriction | 24 |
| Top surface of the hook body | 26 |
| Slot end | 28 |
| Hook body | 30 |
| End of protrusion (second extremity) | 32 |
| Slot | 40 |
| End surface of the hook body | 42 |
| Slot center | 44 |
| Side surface of the hook body | 46 |
| First extremity of the end part | 48 |
| Third extremity of the connection part | 50 |
| Longitudinal axis of the hook body | 52 |
| Second protrusion | 54 |
| Second end | 56 |
| Fourth extremity | 58 |

While embodiments of the invention have been described and illustrated, such embodiments should be considered illustrative of the invention only. The invention may include variants not described or illustrated herein in detail. Thus, the embodiments described and illustrated herein should not be considered to limit the invention as construed in accordance with the accompanying claims.

## Claims

1. An orthodontic hook attachable to a tooth surface, the hook comprising:
(a) a base pad attachable to the tooth surface; and
(b) a hook body comprising a connection part projecting from the base pad and extending to a cantilevered part of the hook body that is cantilevered over the base pad such that a slot is formed in the orthodontic hook, the cantilevered part terminating in an end part of the cantilevered part, a first extremity of the end part being a point of maximum extension along the cantilevered part, a second extremity of the end part being maximally proximate to the base pad, a slot opening formed between the first extremity and the base pad, a slot constriction formed between the second extremity and the base pad,
Wherein the slot narrows from the slot opening to the slot constriction and the slot widens from the slot constriction to a slot center, and a fifth width of the slot constriction is less than 1.0 mm.

2. The orthodontic hook of claim 1 wherein the end part forms a protrusion has a tapered shape and tapers to the second extremity.

3. The orthodontic hook of claim 1 or 2 wherein a second protrusion extending toward the end part from the base pad has a tapered shape and tapers to a second end of the second protrusion, and the slot constriction is formed between the second extremity and the second end.

4. The orthodontic hook of claim 2 wherein a ninth distance between the second extremity and a top surface of the end part is larger by at least 2.4 times than a fifth distance between the first extremity and the top surface of the end part.

5. An orthodontic hook attachable to a tooth surface, the hook comprising:
(a) a base pad attachable to the tooth surface; and
(b) a hook body comprising a connection part projecting from the base pad and extending to a cantilevered part of the hook body that is cantilevered over the base pad such that a slot is formed in the orthodontic hook, the cantilevered part terminating in an end part of the cantilevered part, a first extremity of the end part being a point of maximum extension along the cantilevered part, a second extremity of the end part being maximally proximate to the base pad, the end part forming a protrusion having a tapered shape and tapering to the second extremity,
wherein a ninth distance between the second extremity and a top surface of the end part is larger by at least 2.4 times than a fifth distance between the first extremity and the top surface of the end part.

6. The orthodontic hook of claim 5 wherein a sixth distance between the first extremity and the second extremity is larger by at least 2 times than a fifth distance between the first extremity and the top surface of the end part.

7. The orthodontic hook of claim 5 wherein a slot opening is formed between the first extremity and the base pad, a slot constriction is formed between the second extremity and the base pad, the slot narrows from the slot opening to the slot constriction and the slot widens from the slot constriction to a slot center.

8. The orthodontic hook of claim 7 wherein a fourth width of the slot opening is larger by at least 1.8 times than a fifth width of the slot constriction.

9. The orthodontic hook of claim 8 wherein the fifth width is less than 0.8 mm.

10. The orthodontic hook of claim 5 wherein a second protrusion extending toward the end part from the base pad has a tapered shape and tapers to a second end of the second protrusion, and a slot constriction is formed between the second extremity and the second end.

11. The orthodontic hook of claim 5 wherein the slot defines a slot end maximally distal from the second extremity, a third extremity of the connection part is at a top surface of the connection part and maximally distal from the slot end, and wherein a seventh distance between the third extremity and the slot end is larger than an eighth distance between the first extremity and the slot end.
